Europäisches Patentamt

European Patent Office

Office européen des brevets

(19)

(11) Numéro de publication: **0130917**
**B1**

(12) # FASCICULE DE BREVET EUROPEEN

(45) Date de publication du fascicule du brevet:
**29.10.86**

(51) Int. Cl.⁴: **C 01 B 25/22**, C 01 B 33/08

(21) Numéro de dépôt: **84401388.8**

(22) Date de dépôt: **29.06.84**

(54) **Procédé de fabrication d'acide phosphorique.**

(30) Priorité: **05.07.83 FR 8311140**

(43) Date de publication de la demande:
**09.01.85 Bulletin 85/2**

(45) Mention de la délivrance du brevet:
**29.10.86 Bulletin 86/44**

(84) Etats contractants désignés:
**AT BE DE FR GB IT NL SE**

(56) Documents cités:
**FR - A - 1 459 008**
**GB - A - 2 094 282**
**US - A - 2 636 806**

(73) Titulaire: **RHONE-POULENC CHIMIE DE BASE, 25, quai Paul Doumer, F-92408 Courbevoie (FR)**

(72) Inventeur: **Nineuil, Guy, 188, rue John Kennedy, F-76420 Bihorel (FR)**

(74) Mandataire: **Dubruc, Philippe et al, RHONE-POULENC INTERSERVICES Service Brevets Chimie 25, quai Paul-Doumer, F-92408 Courbevoie Cédex (FR)**

ACTORUM AG

## Description

La présente invention concerne un procédé de fabrication d'acide phosphorique avec récupération sous forme solide des composés de fluor et de silice.

Lors de la fabrication de l'acide phosphorique par voie humide on obtient après attaque acide du minerai de phosphate et filtration un acide phosphorique ayant une concentration en $P_2O_5$ de 25 à 30% environ. Or, cet acide est rarement mis en oeuvre à une telle concentration dans ses différentes utilisations ultérieures.

Des concentrations de 40 à 54% environ sont généralement nécessaires. Ceci implique donc une étape de concentration de l'acide.

Lors de cette concentration, des fluorures s'échappent avec la vapeur d'eau et comme il n'est pas possible de renvoyer dans l'atmosphère des vapeurs chargées en fluor, on traite ces vapeurs par un liquide absorbant les composés fluorés. On obtient des vapeurs purifiées en fluor et qui peuvent ainsi être rejetées et une solution d'acide fluosilicique. Or le problème se pose de l'utilisation de cette solution qui ne peut pas non plus être rejetée compte-tenu de sa teneur en fluor.

L'objet de la présente invention est donc le traitement de cette solution d'acide fluosilicique et sa récupération sous forme neutralisée.

Dans ce but, le procédé selon l'invention est du type comprenant une première attaque acide d'un minerai de phosphate ce par quoi on obtient une première bouillie, une filtration de cette bouillie de manière à séparer l'acide phosphorique produit, une concentration de l'acide avec condensation des vapeurs issues de la concentration par contact avec un liquide absorbant et récupération d'une solution d'acide fluosilicique; et ce procédé est caractérisé en ce qu'on attaque du minerai de phosphate avec ladite solution d'acide fluosilicique et en présence d'une première partie de l'acide phosphorique obtenu après la filtration ou d'une partie de la première bouillie précitée ce par quoi on obtient une seconde bouillie, on filtre cette seconde bouillie et on sépare un solide comprenant des composés de fluor et de silice, essentiellement sous la forme de chukhrovite, et un acide phosphorique que l'on réunit, avant concentration à la deuxième partie de l'acide obtenu après la filtration de la première bouillie ou que l'on recycle à la première attaque précitée.

Selon une variante de l'invention, on mélange une partie de l'acide concentré avec les acides obtenus par filtration de la première et de la seconde bouillie précitée, on filtre le mélange obtenu et l'acide filtré obtenu est envoyé à la concentration.

Le procédé de l'invention est donc particulièrement avantageux puisqu'il permet de recycler dans le processus de fabrication de l'acide phosphorique la solution d'acide fluosilicique et de récupérer sous forme neutralisée les composés de fluor et de silice de l'acide phosphorique.

En outre, comme on le verra plus loin, le procédé permet d'obtenir un acide ayant une faible teneur en impuretés, notamment en $H_2SO_4$.

Enfin, il permet d'utiliser pour l'attaque acide du minerai une quantité d'acide, par exemple d'acide sulfurique moins importante.

D'autres caractéristiques et avantages de l'invention apparaîtront plus clairement à la lecture de la description que va suivre et faite en référence aux dessins annexés dans lesquels:

la figure 1 est un schéma illustrant un premier mode de réalisation de l'invention;

la figure 2 est un schéma illustrant un second mode de réalisation de l'invention.

L'attaque acide du minerai de phosphate se fait dans des conditions connues, dans une cuve unique ou éventuellement dans plusieurs cuves. L'invention s'applique particulièrement au cas où l'acide d'attaque est l'acide sulfurique et où les conditions d'attaque conduisent à la formation de gypse.

La bouillie d'attaque est ensuite filtrée et on obtient un acide phosphorique ayant une concentration généralement voisine ou de 30% en $P_2O_5$.

Cet acide doit donc ensuite être concentré. Avant l'étape de concentration, on peut, bien entendu, le laisser desursaturer et décanter selon des conditions connues.

Après la décantation, l'acide peut être stocké ou envoyé directement à la concentration.

Selon une variante de l'invention et dans le cas où l'attaque fluosilicique est réalisée en présence d'acide phosphorique, l'acide obtenu après l'attaque principale et qui a éventuellement subi les traitements qui viennent d'être décrits est, avant la concentration, divisé en deux parties. La première partie sert à l'attaque fluosilicique qui va être décrite plus en détail ci-dessous, la seconde partie va à la concentration.

Cette concentration peut se faire selon tout procédé connu. La concentration est généralement conduite de manière à obtenir un acide à une teneur en $P_2O_5$ habituellement comprise entre 45-55%. On peut bien entendu laisser desursaturer puis décanter cet acide de manière à obtenir un acide clarifié qui constitue la productiton. Par ailleurs, lors de la concentration se dégage alors des vapeurs contenant notamment des fluorures et ces vapeurs sont traitées dans un absorber de manière à obtenir une solution d'acide fluosilicique.

Selon l'invention, la solution d'acide fluosilicique est recyclée dans le système. Pour cela on attaque du minerai de phosphate avec cette solution et en présence soit d'une bouillie d'attaque provenant de l'attaque acide principale du minerai décrite plus haut soit de l'acide phosphorique obtenu après cette attaque et après filtration et éventuellement après désursaturation et décantation. Dans ce dernier cas l'acide phosphorique utilisé pour cette attaque peut avoir deux origines. Comme décrit plus haut, ce peut être tout d'abord l'acide fort de filtration. Une autre possibilité existe. On sait en effet qu'au moment de la filtration, outre l'acide fort provenant de la filtration directe de la bouillie, on recueille aussi des jus ou acides de filtration plus faibles provenant du lavage du gâteau. Ces jus sont recyclés à l'attaque. Selon l'invention il est possible d'utiliser comme source d'acide phosphorique pour l'attaque fluosilicique, une partie de ces jus.

L'attaque par l'acide fluosilicique se fait dans des conditions telles que les composés du fluor et de la silice soient insolubilisés essentiellement sous la forme de chukhrovite.

D'une manière générale, la solution d'acide fluosilicique utilisée à l'attaque présente une concentration comprise entre environ 10% et environ 25% et de préférence entre 20 et 25%, ceci en vue d'améliorer le bilan eau et d'obtenir une teneur en $P_2O_5$ la plus élevée possible.

Par ailleurs, l'attaque avec l'acide fluosilicique doit se faire dans des conditions telles que l'on ait dans la phase liquide du mélange réactionnel un rapport $M^{n+}/PO_4^{3-}$ (où M désigne les cations alcalins et alcalino terreux hors $CaSO_4$) d'environ 0,1. Ce rapport peut être légèrement supéreur à 0,1. Cependant la limite supérieure de ce rapport est fixée de manière à éviter la formation d'une émulsion dans le milieu réactionnel qui pourrait empêcher toute séparation ultérieure des phases, cette émulsion étant à base d'un mélange comprenant du fluorure de calcium et des sels de phosphate.

Ce même rapport $M^{n+}PO_4^{3-}$ est d'environ 0,1 dans le cas des phosphates habituels et il varie légèrement en fonction inverse de la concentration en $P_2O_5$. Il peut être inférieur à cette valeur mais dans ce cas on élimine moins le fluor.

Ce rapport $M^{n+}PO_4^{3-}$ étant fixé, on opère de préférence dans des conditions telles que la teneur en fluor dans la phase liquide exprimée en $H_2SiF_6$ est d'environ 2% ou plus et que la concentration en $P_2O_5$ est d'environ 20 à 30% de preférence entre 27 et 30%.

Ces conditions précitées sur la teneur en fluor sont déterminées de manière à faire précipiter le maximum de fluor.

La limite supérieure de cette concentration n'est pas très critique car si l'on augmente la concentration en fluor, on précipite de moins en moins les composés fluorés et donc le fluor est recyclé dans le procédé et il n'est pas éliminé. Les domaines indiqués ci-dessus correspondent donc aux concentrations optimales qui permettent une élimination maximale des composés fluorés.

La température de réaction sera de préférence comprise entre 60°C et 80°C. Le temps de séjour dans la cuve d'attaque variera selon le taux d'attaque voulu du phosphate. Par ailleurs, il est avantageux lors de l'attaque fluosilicique d'ajouter de l'aluminium au milieu. Un tel ajout favorise la formation de chukhrovite. L'aluminium pourra être ajouté sous toute forme convenable notamment sous forme de phosphates riches en aluminium.

La seconde bouillie résultant de cette attaque est envoyée sur un filtre avec lequel on sépare l'acide phosphorique produit et un solide comprenant des composés de fluor et de silice essentiellement sous forme de chukhrovite.

L'acide ainsi obtenu peut être soit renvoyé à la première attaque, soit mélangé à la deuxième partie de l'acide obtenu après la filtration le la première bouillie. Dans ce dernier cas, le mélange d'acides est envoyé à la concentration.

Une description de modes de réalisation en continu de l'invention va maintenant être donnée en référence aux figures annexées.

On notera que les exemples qui suivent décrivent seulement l'attaque fluosilicique en présence d'acide phosphorique mais pas le cas où cette attaque se ferait en présence d'une partie de bouillie de l'attaque principale. Cependant, il est évident que tout ce qui est décrit ci-dessous s'appliquerait de même à ce dernier cas.

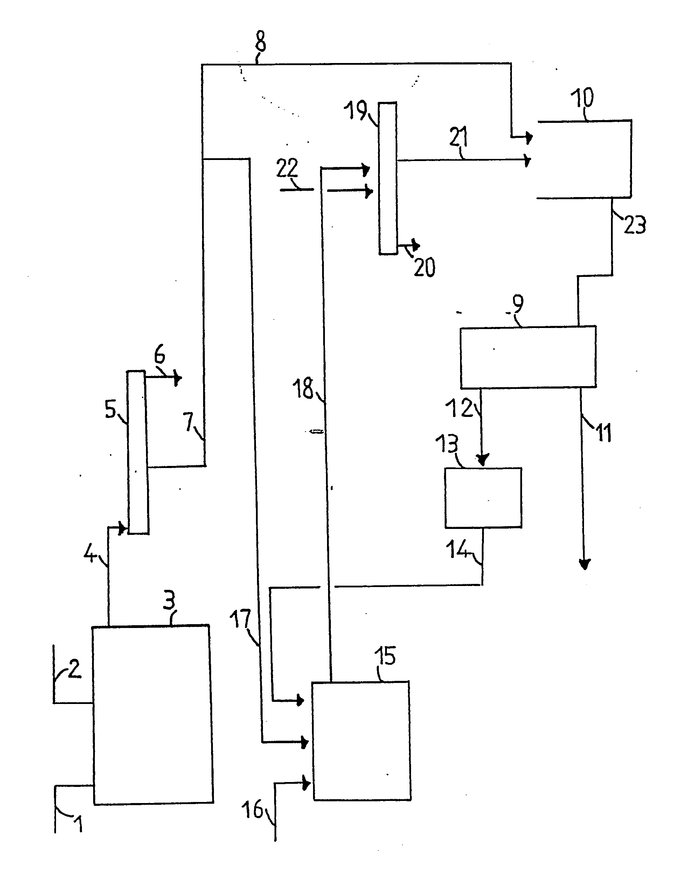

Selon le procédé illustré par la figure 1 le minerai de phosphate et l'acide sulfurique sont introduits par (1) et (2) respectivement dans une cuve d'attaque (3). Par (4) sort de cette cuve une bouillie qui est filtrée sur un filtre (5). On élimine en (6) la gypse formé. L'acide filtré sort du filtre en (7).

Après avoir éventuellement desursaturé et décanté, l'acide phosphorique est divisé en deux parties. Une partie est amenée par (8) au concentrateur (9), après passage dans une cuve (10).

Du concentrateur sort en (11) un acide concentré qui constitue la production.

Cet acide peut subir d'une manière connue en soi une désursaturation et/ou une décantation permettant après filtration une élimination complémentaire de sels de fluor avec le sulfate de calcium formé. Les vapeurs issues du concentrateur (9) sont amenées par (12) dans un absorbeur (13) d'où l'on récupère par (14) une solution d'acide fluosilicique.

Cette solution est alors amenée dans une seconde cuve d'attaque (15) où elle se trouve en présence de minerai de phosphate introduit par (16) et d'acide phosphorique amené par (17), ce flux (17) constituant la seconde partie du flux (17) issu du filtre (5).

On obtient à la suite de cette seconde attaque une seconde bouillie qui est amenée par (18) sur un filtre (19) où l'on sépare un solide comportant essentiellement de la chukhrovite et du sulfate de chaux en (20) et de l'acide phosphorique (21) qui est envoyé dans la cuve (10) pour mélange avec l'acide (8).

Par ailleurs, un lavage du gâteau de filtration est prévu par (22).

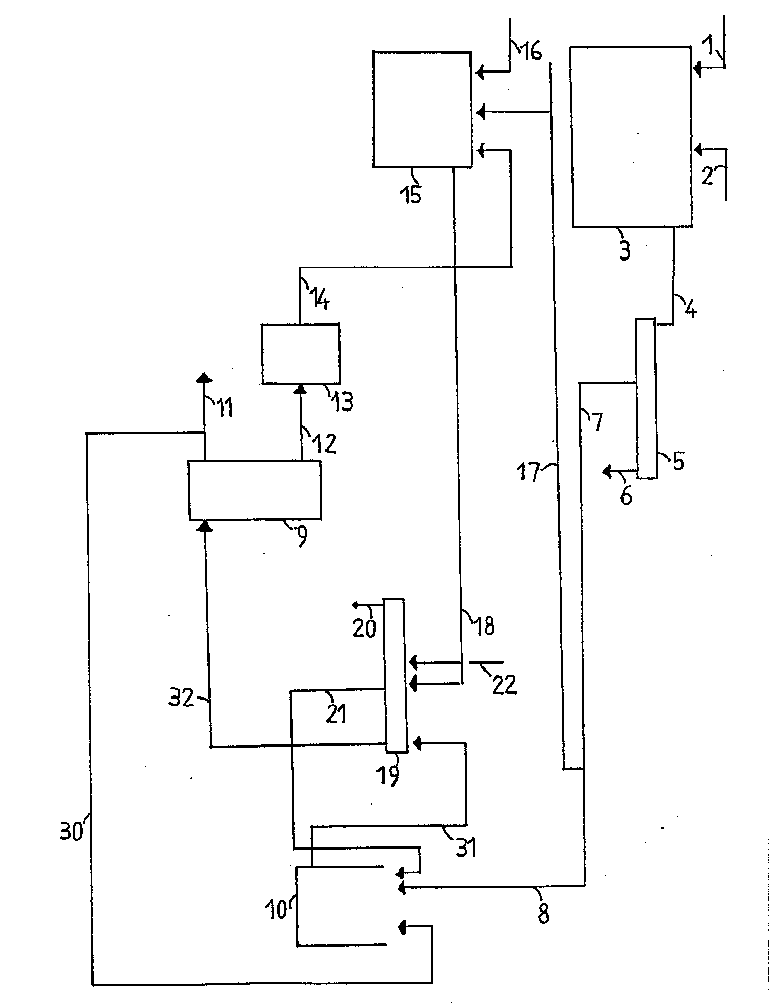

La figure 2 illustre un second mode préféré de réalisation de l'invention qui permet une mise en oeuvre plus facile du procédé dans l'élimination du fluor. Cette variante consiste essentiellement à remélanger de l'acide concentré et les acides issus des attaques principale et fluosilicique pour obtenir un mélange d'environ 40% en $P_2O_5$, ce qui permet de précipiter des quantités complémentaires de fluor. Les mêmes références ont été utilisées pour désigner les appareillages et les circulations de matières identiques à ceux de la figure 1. Les étapes communes aux deux modes de réalisation ne seront donc pas décrites.

A la différence du cas de la figure 1, les acides (8) et (21) mélangés dans la cuve (10) ne sont pas amenés directement à la concentration. Ils sont tout d'abord mélangés dans la cuve (10) avec une partie de l'acide concentré amené par (30). Il se forme alors dans le mélange un précipité de $CaSo_4$ et de chukhrovite.

Ce mélange d'acide chargé de précipité est amené par (31) sur le filtre (19). Lors de la filtration en continu, il est filtré en tête de manière à former un premier gâteau de filtration et on filtre ensuite la bouillie (18).

Le mélange d'acides provenant de la filtration du premier gâteau ou du premier secteur du filtre est alors amené par (32) au concentrateur (9).

On peut noter qu'il est possible de ne pas mélanger en même temps les acides obtenus par la filtration des deux bouillies et l'acide concentré mais que l'on peut d'abord effectuer un prémélange de l'acide de la première bouillie et de l'acide de la seconde. Ce prémélange peut d'ailleurs être stocké pendant un temps plus ou moins long de 1 heure à 24 heures avant d'être mis en présence avec l'acide concentré. Cette manière de procéder permet d'obtenir des cristaux plus facilement filtrables.

Des exemples vont être donnés ci-dessous. Dans ces exemples les compositions sont données en % en poids sauf indications contraires.

*Exemple 1*

Cet exemple illustre le mode de réalisation de la figure 1.

On réalise tout d'abord une attaque fluosilicique dans les conditions suivantes.

On introduit dans la cuve d'attaque (15) 276 g/ heure d'un minerai de phosphate présentant la composition suivante:

| | |
|---|---|
| $P_2O_5$ | 36,7% |
| F | 3,8% |
| $SiO_2$ | 3,2% |
| $Al_2O_3$ | 1 % |

Ce minerai est mélangé avec 1722 g/heure d'acide phosphorique (17) provenant d'une attaque sulfurique et de composition ci-dessus [le rapport massique des flux (17)/(8) étant de 1/4]; $P_2O_5$: 27%; F: 1,9%; SiO: 1,1%; $H_2SO_4$: 2,58; $H_2SO_4/P_2O_5$: 9,53%; $Al_2O_3/P_2O_5$: 1,15 et est attaqué par 510 g/heure d'un acide fluosilicique (14) de composition suivante: F: 15,3%; $SiO_2$: 7,9%.

On filtre une bouillie (18) donnant un acide présentant la composition suivante: $P_2O_5$: 26,85%; F: 4,02%; $SiO_2$: 2,20%; CaO: 4,25%; $Al_2O_3$: 0,1%. On obtient après lavage un gateau de 375 g à une teneur en solide sec à 120°C de 36,7% et avec 26,8% de F et 16,20% de $SiO_2$ par rapport au solide sec à 120°C.

Après filtration et lavage, on mélange l'acide avec de l'acide phosphorique (8) et de même composition que l'acide (17) dans le bac (10) et on agite pendant une heure. Le mélange est concentré en (9) et on obtient un acide (11) qui après desursaturation dans un bac agité pendant 24 heures à 50°C puis filtration présente la composition suivante:

| | |
|---|---|
| $P_2O_2O_5$ | : 56,55% |
| $H_2SO_4$ | : 0,56% |
| F | : 0,53% |
| $H_2SO_4/P_2O_5$ | : 0,99 |
| Solide après filtration et lavage | : 130 g |
| F | : 1,54% solide tel quel |
| | 3,1% solide sec à 60°C |
| | 3,7% solide sec à 120°C |
| $SiO_2$ | : 0,06% |
| $Al_2O_3$ | : 0,6% |

*Exemple 2*

On procède de la même manière que dans l'exemple 1.

Attaque 15:

300 g/h d'un minerai de phosphate, 17 g de phosphate d'aluminium (à 35% d'$Al_2O_3$) 1722 g/h d'un acide phosphorique, 510 g/h d'un acide fluosilicique.

Le minerai et les acides ont la même composition que dans l'exemple 1. Les rapports massiques des flux (17)/(8) sont identiques.

Acide filtre: $P_2O_5$: 26,8%; F: 3,58%; $SiO_2$: 2,14%; CaO: 4,8%; $Al_2O_3$: 0,3%. On obtient après lavage un gateau de 345 g à une teneur en solide sec à 120°C de 40,2% et avec 27,39% de fluor et 16,75% de $SiO_2$ par rapport au solide sec à 120°C.

On mélange dans la cuve 10 les flux (21) et (8) dans les mêmes conditions que l'exemple 1.

On obtient un acide phosphorique après concentration de composition $P_2O_5$: 52,35%; $SiO_2$: 0,15%; F: 0,61%.

Après desursaturation dans les mêmes conditions que l'exemple 1 puis filtration on obtient un acide de composition:

| | |
|---|---|
| $P_2O_5$ | : 54% |
| $SiO_2/P_2O_5$ | : 0,09% |
| $H_2SO_4/P_2O_5$ | : 0,24% |
| $F/P_2O_5$ | : 0,49% |
| Solide après filtration et lavage | : 100 g |
| F | : 2,2% solide |
| | : 4,4% solide sec 60°C |
| | : 5,3% solide sec 120°C |
| $Al_2O_3$ | : 0,6% |

*Exemple 3*

Cet exemple illustre le mode de réalisation de la figure 2.

On réalise une attaque (15) dans les mêmes conditions que dans l'exemple 1. Les rapports massiques des flux (17)/(8) étant de 1/4.

Les flux (21) et (8) sont mélangés et donnent un acide de composition: $P_2O_5$: 27,0%; $SiO_2$: 1,25%; F: 2,31%; $Al_2O_3$: 0,3%.

Cet acide est mélangé avec une quantité équivalente d'une acide (30) concentré à 55,8% enrichi en solide de l'acide (11) 55,8% décanté.

On obtient ainsi un acide (31) ayant une concentration en $P_2O_5$ de 43% qui est filtré. On obtient un solide après lavage de 80 g à teneur en F de 4,84% par rapport au solide humide, soit 12% par rapport au solide sec à 120°C. Cet acide (32) est concentré. On obtient l'acide (11) qui constitue la production et qui présente après décantation la composition suivante:

$P_2O_5$: 55,8%; $SiO_2$: 0,10%; F: 0,3%; $H_2SO_4/P_2O_5$: 0,95%; $Al_2O_3$: 0,5%.

*Exemple 4*

On met aussi en oeuvre le mode de réalisation de la figure 2.

On réalise l'attaque (15) dans les mêmes conditions que dans l'exemple 2.

Les rapports massiques de flux (17)/(8) sont dans le rapport 3/7. Le solide 20 a la même composition que donnée pour l'exemple 2.

Les flux (21) et (8) mélangés donnent un acide de composition:

$P_2O_5$: 29,64%; $SiO_2$: 0,58%; F: 2,06%; $Al_2O_3$: 0,4%.

Cet acide est mélangé avec une quantité équivalente d'un acide (30) à 54,7% enrichi du solide de l'acide (11) décanté.

On obtient un acide (30) à 42,75% de $P_2O_5$ qui est filtré. On obtient un solide après lavage de 90 g présentant 6,2% en fluor soit 15% pour le solide sec à 120°C. L'acide filtré (32) est concentré. On obtient l'acide (11) qui constitue la production et qui présente après décantation la composition suivante:

$P_2O_5$: 54,7%; $SiO_2$: 0,04%; F: 0,27%; $H_2SO_4/P_2P_5$: 0,2%; $Al_2O_3$: 0,6%.

Bien entendu, l'invention n'est nullement limitée aux modes de réalisation décrits qui n'ont été donnés qu'à titre d'exemples.

## Revendications

1. Procédé de fabrication d'acide phosphorique avec récupération des composés de fluor et de silice, du type comprenant une première attaque acide d'un minerai de phosphate, ce par quoi on obtient une première bouillie, une filtration de cette bouillie de manière à séparer l'acide phosphorique produit, une concentration de l'acide avec condensation des vapeurs issues de la concentration par contact avec un liquide absorbant et récupération d'une solution d'acide fluosilicique, caractérisé en ce qu'on attaque une quantité ultérieure du minerai de phosphate avec ladite solution d'acide fluosilicique et en présence d'une partie de la première bouillie précitée ou d'une partie de l'acide phosphorique obtenu après la filtration ce par quoi on obtient une seconde bouillie, on filtre cette bouillie, on sépare un solide comprenant des composés de fluor et de silice, essentiellement sous la forme de chukhrovite et un acide phosphorique que l'on réunit avant concentration à la deuxième partie de l'acide obtenu après la filtration de la première bouillie ou que l'on recycle à la première attaque précitée.

2. Procédé selon la revendication 1, caractérisé en ce que la première attaque acide du minerai de phosphate se fait avec l'acide sulfurique.

3. Procédé selon la revendication 1 ou 2, caractérisé en ce qu'on réalise l'attaque du minerai de phosphate avec l'acide fluosilicique dans des conditions telles que l'on ait dans la phase liquide du mélange réactionnel un rapport $M^{n+}PO_4^{3-}$ (où M désigne les cations alcalins et alcalino terreux hors $CaSO_4$) d'environ 0,1.

4. Procédé selon la revendication 1, 2 ou 3, caractérisé en ce que la phase liquide du mélange réactionnel présente une teneur en fluor exprimée en $H_2SiF_6$ d'environ 2% ou plus et une concentration en $P_2O_5$ d'environ 20% à 30% et de préférence entre 27% et 30%.

5. Procédé selon l'une quelconque des revendications précédentes, caractérisé en ce qu'on mélange une partie de l'acide concentré avec les acides obtenus par filtration de la première et de la seconde bouillie précitée, on filtre le mélange résultant et l'acide filtré obtenu est envoyé à la concentration.

6. Procédé selon la revendication 5, caractérisé en ce qu'on mélange tout d'abord les acides obtenus par filtration de la première et de la seconde bouillie précitée et on réunit le mélange obtenu à une partie de l'acide concentré.

7. Procédé selon l'une quelconque des revendications 5 ou 6, caractérisé en ce qu'on utilise pour la filtration du mélange d'acides le même filtre que pour la seconde bouillie et en ce que, dans le cas d'une filtration en continu on filtre tout d'abord le mélange d'acides de manière à former un gâteau de filtration, puis ensuite la seconde bouillie sur ce gâteau.

8. Procédé selon l'une quelconque des revendications précédentes, caractérisé en ce qu'on utilise dans l'attaque du minerai avec l'acide fluosilicique, l'acide phosphorique fort de filtration de la bouillie de première attaque.

9. Procédé selon l'une quelconque des revendications 1 à 7, caractérisé en ce qu'on utilise dans l'attaque du minerai avec l'acide fluosilicique, une partie de l'acide non-fort de filtration recyclé à l'attaque, obtenu par lavage du gâteau de filtration de la bouillie de première attaque.

10. Procédé selon l'une quelconque des revendications précédentes, caractérisé en ce que lors de l'attaque du minerai à l'acide fluosilicique, on ajoute de l'aluminium au milieu d'attaque.

## Patentansprüche

1. Verfahren zur Herstellung von Phosphorsäure mit Rückgewinnung von Fluor- und Siliciumverbindungen, welches einen ersten sauren Aufschluss eines Phosphatminerals, wodurch man einen ersten Brei erhält, eine Filtration dieses Breis zur Abtrennung der gebildeten Phosphorsäure, eine Konzentration der Säure mit Kondensation der bei der Konzentration entstehenden Dämpfe durch Kontakt mit einem flüssigen Absorptionsmittel und Rückgewinnung einer Lösung von Fluorokieselsäure umfasst, dadurch gekennzeichnet, dass man eine weitere Menge des Phosphatminerals mit der genannten Lösung der Fluorokieselsäure und in Gegenwart eines Teils des ersten oben genannten Breis oder eines Teils der nach der Filtration erhaltenen Phosphorsäure aufschliesst, wodurch man einen zweiten Brei erhält, dass man diesen Brei filtriert, dass man einen Feststoff von Fluor- und Siliciumverbindungen, im wesentlichen in der Form von Chukhrovit, und eine Phosphorsäure abtrennt, die man vor Konzentration mit dem zweiten Teil der nach Filtration des ersten Breis erhaltenen Säure vereinigt, oder dass man sie zu der ersten Aufschlussstufe zurückführt.

2. Verfahren nach Anspruch 1, dadurch gekennzeichnet, dass man den ersten sauren Aufschluss des Phosphatminerals mit Schwefelsäure durchführt.

3. Verfahren nach Anspruch 1 oder 2, dadurch gekennzeichnet, dass man den Aufschluss des Phosphatminerals mit Fluorokieselsäure unter solchen Bedingungen durchführt, dass man in der flüssigen Phase des Reaktionsegmisches ein Verhältnis $M^{n+}PO_4^{3-}$ von etwa 0,1 hat, wobei M die Alkali- und Erdalkalikationen (ausser $CaSO_4$) bezeichnet.

4. Verfahren nach einem der Ansprüche 1 bis 3, dadurch gekennzeichnet, dass die flüssige Phase des Reaktionsgemisches einen Fluorgehalt, ausgedrückt als $H_2SiF_6$, von etwa 2% oder mehr und eine Konzentration an $P_2O_5$ von etwa 20% bis 30% und vorzugsweise zwischen 27 und 30% aufweist.

5. Verfahren nach einem der Ansprüche 1 bis 4, dadurch gekennzeichnet, dass man einen Teil der konzentrierten Säure mit den durch Filtration des ersten und des zweiten Breis erhaltenen Säuren mischt, die resultierende Mischung filltriert und die erhaltene filtrierte Säure zur Konzentration schickt.

6. Verfahren nach Anspruch 5, dadurch gekennzeichnet, dass man zunächst die durch Filtration des genannten ersten und zweiten Breis erhaltenen Säuren mischt und die erhaltene Mischung mit einem Teil der konzentrierten Säure vereinigt.

7. Verfahren nach einem der Ansprüche 5 oder 6, dadurch gekennzeichnet, dass man zur Filtration des Gemisches der Säuren das gleiche Filter wie für den zweiten Brei verwendet und dass man im Falle einer kontinuierlichen Filtration zuerst das Säuregemisch filtriert, um einen Filterkuchen zu bilden, und dann den zweiten Brei über diesen Kuchen filtriert.

8. Verfahren nach einem der vorangehenden Ansprüche, dadurch gekennzeichnet, dass man bei dem Aufschluss des Minerals mit Fluorokieselsäure die starke Phosphorsäure der Filtration des Breis des ersten Aufschlusses verwendet.

9. Verfahren nach einem der Ansprüche 1 bis 7, dadurch gekennzeichnet, dass man bei dem Aufschluss des Minerals mit Fluorokieselsäure einen Teil der nicht starken, zum Aufschluss rückgeführten Säure der Filtration verwendet, die durch Waschen des Filterkuchens des Breis des ersten Aufschlusses erhalten wurde.

10. Verfahren nach einem der vorangehenden Ansprüche, dadurch gekennzeichnet, dass man bei dem Aufschluss des Minerals mit Fluorokieselsäure dem Aufschlussmilieu Aluminium zusetzt.

## Claims

1. A process for the production of phosphoric acid with recovery of compounds of fluorine and silica, of the type comprising a first acid attack on a phosphate ore, thereby producing a first slurry, filtration of said slurry so as to separate the phosphoric acid produced, concentration of the acid with condensation of the vapours resulting from the concentration operation by contact with an absorbent liquid and recovery of a solution of fluosilicic acid, characterised by attacking a further amount of the phosphate ore with said solution of fluosilicic acid and in the presence of a portion of said first slurry or a portion of the phosphoric acid produced after the filtration operation, thereby producing a second slurry, filtering said slurry, separating a solid comprising compounds of fluorine and silica, essentially in the form of chukhrovite and a phosphoric acid which is combined prior to concentration with the second portion of the acid obtained after filtration of the first slurry or which is recycled to said first attack operation.

2. A process according to claim 1, characterised in that the first acid attack on the phosphate ore is carried out using sulphuric acid.

3. A process according to claim 1 or claim 2, characterised by carrying out the operation of attacking the phosphate ore with fluosilicic acid under conditions such that the $M^{n+}PO_4^{3-}$ (in which M denotes alkali metal and alkaline earth cations apart from $CaSO_4$) in the liquid phase of the reaction mixture is about 0.1.

4. A process according to claim 1, claim 2 or claim 3, characterised in that the liquid phase of the reaction mixture has an amount of fluorine expressed as $H_2SiF_6$ of about 2% or more and a concentration of $P_2O_5$ of about 20% to 30% and preferably between 27% and 30%.

5. A process according to any one of the preceding claims, characterised by mixing a part of the concentrated acid with the acids produced by filtration of said first and second slurries, filtering the resulting mixture and passing the filtered acid produced to the concentration operation.

6. A process according to claim 5, characterised by first mixing the acids obtained by filtration from said first and second slurries and combining the resulting mixture with a part of the concentrated acid.

7. A process according to either one of claims 5 and 6, characterised in that the same filter is used for filtration of the mixture of acids, as for the second slurry, and that, in the case of continuous filtration, the mixture of acids is first filtered so as to form a filter cake, and then the second slurry is filtered over said cake.

8. A process according to any one of the preceding claims, characterised by using, in the operation of attacking the ore with fluosilicic acid, the strong phosphoric acid from filtration of the slurry from the first attack.

9. A process according to any one of the claims 1 to 7, characterised by using, in the operation of attacking the ore with fluosilicic acid, a part of the non-strong acid from filtration, which is recycled to the attack operation, produced by washing the filter cake from the slurry from the first attack.

10. A process according to any one of the preceding claims, characterised in that in the operation of attacking the ore with fluosilicic acid, aluminium is added to the attack medium.

8

19  21  10

22  23

20

9

6

5  7  18  12  11

13

4

3  14

2  17  15

16

1